## Europäisches Patentamt
## European Patent Office
## Office européen des brevets

(11) Veröffentlichungsnummer: **0 176 939**
**B1**

(12) **EUROPÄISCHE PATENTSCHRIFT**

(45) Veröffentlichungstag der Patentschrift:
23.08.89

(51) Int. Cl.⁴: **G06F 12/10, G06F 12/02**

(21) Anmeldenummer: 85112126.9

(22) Anmeldetag: 25.09.85

(54) Datenverarbeitungsanlagen mit virtueller Speicheradressierung für eine Vielzahl von Benutzern.

(30) Priorität: 28.09.84 DE 3435723

(43) Veröffentlichungstag der Anmeldung:
09.04.86 Patentblatt 86/15

(45) Bekanntmachung des Hinweises auf die Patenterteilung:
23.08.89 Patentblatt 89/34

(84) Benannte Vertragsstaaten:
AT BE CH DE FR GB IT LI NL SE

(56) Entgegenhaltungen:
EP-A- 0 059 236
US-A- 4 130 870

IBM TECHNICAL DISCLOSURE BULLETIN, Band 21,
Nr. 6, November 1978, Seiten 2465-2467, New York, US;
P.M. GANNON u.a.: "Efficient directory lookaside
table"

(73) Patentinhaber: Siemens Aktiengesellschaft,
Wittelsbacherplatz 2, D-8000 München 2(DE)

(72) Erfinder: Köhler, Manfred, Dipl.-Ing., Eichenstrasse 4,
D-8011 Putzbrunn(DE)

**Beschreibung**

Die Erfindung bezieht sich auf eine Datenverarbeitungsanlage nach den Merkmalen des Oberbegriffs des Patentanspruchs 1.

Kommerzielle Datenverarbeitungsanlagen arbeiten gewöhnlich mit virtueller Adressierung, wobei der dafür vorgesehene virtuelle Adreß- oder Speicherraum in Segmente mit jeweils mehreren Seiten gleicher Größe, üblicherweise 2KB oder 4KB, unterteilt ist. Im Falle eines Mehrbenutzersystems arbeitet jedes Benutzerprogramm bzw. jeder Anwender innerhalb eines eigenen virtuellen Raum von jeweils 0 bis z.B. 16 MByte. Jeder Benutzer hat dabei als Kennzeichen seine eigene sogenannte Segmenttafel-Basis, so daß sich alle Benutzerprogramme leicht voneinander trennen lassen.

Die Verwendung virtueller Speicher bedeutet bekanntlich, daß beim Zugriff zum Arbeitsspeicher vorher jede virtuelle Adresse in eine reelle, physikalische Adresse übersetzt werden muß. Das Erreichen einer hohen ProzessorLeistung setzt weiterhin voraus, daß neben den Übersetzungstafeln, die vom Betriebssystem im Hauptspeicher zur Verfügung gestellt werden, eine Hardware-Unterstützung in der Zentraleinheit, die sogenannte Adreßumsetzungseinheit vorhanden ist. In dieser Adreßumsetzungseinheit sollen möglichst die aktuellsten Einträge der Übersetzungstabellen resident gehalten werden. Jeder Eintrag in der Adreßumsetzungseinheit enthält dabei neben um fangreicher Steuerinformation als wesentliche Nutzinformation Teile der virtuellen Adresse und die zugehörige reelle Adresse. Bekannte Adreßumsetzungsspeicher arbeiten entweder mit wahlfreiem Zugriff oder mit adreßabhängigem Zugriff. Die folgenden Ausführungen beziehen sich auf Adreßumsetzungsspeicher mit adreßabhängigem Zugriff.

Es gibt im wesentlichen zwei Gründe, die eine effektive Adreßumsetzungseinheit in der Zentraleinheit erforderlich machen. Sofern nämlich die Umwandlung der virtuellen Adresse in eine reelle Adresse mit Hilfe der Adreßumsetzungseinheit in der Zentraleinheit gelingt, kostet dies praktisch keine ProzessorLeistung bzw. maximal nur einen Maschinenzyklus. Muß dagegen die Adreßübersetzung über die Übersetzungstabelle im Hauptspeicher ausgeführt werden, so sind im Mittel ca. zehn zusätzliche Maschinenzyklen erforderlich. Es ist deshalb anzustreben, daß die Trefferrate in der Adreßumsetzungseinheit ca. 99% erreicht. Der zweite Grund besteht darin, daß der Hauptspeicherbedarf für das Betriebssystem und die simultan ablaufenden Anwenderprogramme ständig zunimmt. Damit wächst auch die Länge der Übersetzungstabellen im Hauptspeicher. Mit steigender Prozessor-Leistung wächst außerdem die Anzahl der simultan ablaufenden Anwenderprogramme und damit die Anzahl der Übersetzungstabellen. Beide Gründe machen es deshalb erforderlich, daß möglichst viele und aktuelle und außerdem Übersetzungstafeleinträge für verschiedene virtuelle Adreßräume gleichzeitig im Adreßumsetzungsspeicher geführt werden können.

Ausgehend von einer Datenverarbeitungsanlage mit virtueller Speicheradressierung unter Verwendung einer Adreßumsetzungseinheit mit adreßgesteuertem Zugriff liegt der vorliegenden Erfindung die Aufgabe zugrunde, den Adreßumsetzungsspeicher in der Weise auszubilden, daß einerseits Einträge für das Betriebssystem und andererseits Einträge für beliebig viele Anwenderprogramme leicht voneinander getrennt werden können. Außerdem soll im Adreßumsetzungsspeicher eine ausreichend große Kapazität für den Befehlscode des Betriebssystems und für gemeinsame Daten zur Verfügung gestellt werden, wobei der für das Betriebssystem einerseits und die Benutzerprogramme andererseits benötigte virtuelle Speicherbedarf je nach Gesamtanwendung variabel festgelegt werden kann.

Die Lösung dieser Aufgabe ergibt sich erfindungsgemäß durch die kennzeichnenden Merkmale des Anspruchs 1. Der Vorteil dieser Maßnahme besteht vor allem darin, daß die besonders wichtigen Seitentafeleinträge des Betriebssystems in einer separaten Bank eingetragen werden, während für die Seitentafeleinträge der Benutzerprogramme wenigstens eine, vorzugsweise zwei weitere Bänke zur Verfügung stehen. Damit ist ein Anteil von 33 bis 50% der Kapazität des Adreßumsetzungsspeichers ausschließlich für das Betriebssystem reserviert. Die Betriebssystem-Einträge können somit auf sehr einfache und wirkungsvolle Weise vor Verdrängung durch die Benutzerprogramm-Einträge geschützt werden.

Weitere vorteilhafte Ausgestaltungen der Erfindung, mit denen unter anderem eine möglichst gleichmäßige Auslastung der einzelnen Bänke und Zeilen innerhalb der Adreßumsetzungseinheit erreicht werden soll, sind in den Unteransprüchen angegeben.

Im folgenden wird ein Ausführungsbeispiel der Erfindung anhand der Zeichnung näher erläutert. Dabei zeigen

FIG 1 den prinzipiellen Aufbau einer aus mehreren Bänken bestehenden Adreßumsetzungseinheit gemäß der Erfindung,

FIG 2 eine Schaltungsanordnung zur bankbezogenen Zuordnung einzelner Adreßeinträge bei einer Adreßumsetzungseinheit nach FIG 1 in Abhängigkeit von einer Systemgrenze innerhalb eines jeweils benutzerspezifischen virtuellen Speicherraums

FIG 3 eine Schaltungsanordnung zur Adreßverwürfelung der Zeilenadresse zur Adressierung der Adreßumsetzungseinheit gemäß FIG 1.

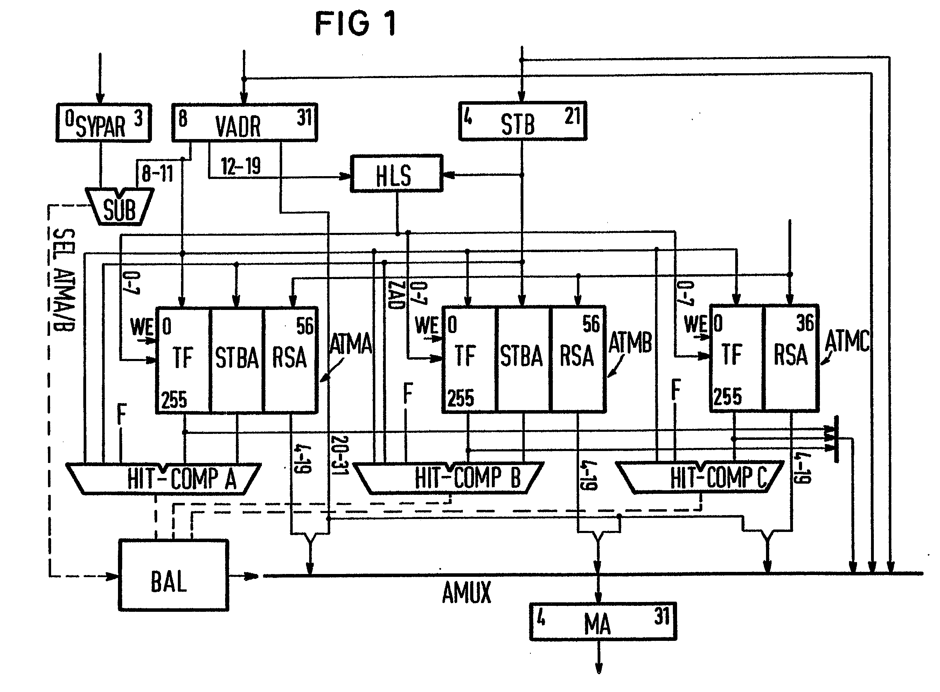

Die in FIG 1 dargestellte Adreßumsetzungseinheit besteht aus einer ersten und zweiten Bank ATM A und ATM B für die Seitentafeleinträge der Benutzerprogramme und aus einer dritten Bank ATM C für die Seitentafeleinträge des Betriebssystems. Jede Bank enthält ein Tag/Flag- Feld TF, in dem neben verschiedenen Steuerbits, Gültigkeitsbits und Paritätsbits die vier höchstwertigen Bits 8 bis 11 der virtuellen Adresse gespeichert sind, und einen Adreßbereich RSA zur Speicherung der reellen Seitenadressen einschließlich der Paritätsbits. Die beiden ersten Bänke ATM A und ATM B für die Seitentafeleinträge der Benutzerprogramme enthalten darüber hinaus ein Kontrollfeld STBA, in welchem jeweils die Segmenttafel-Basis mit den Bits 4 bis 21 zum jeweils zugehörigen Benutzerprogramm gespeichert ist. Für die dritte Bank ATM C, in der ausschließlich Seitentafeleinträge des Betriebssystems geführt werden, kann das Abspeichern der Segmenttafel-Basis entfallen, da die Zugehörigkeit einer Adresse zum System-Adreßraum an der virtuellen Adresse selbst erkannt werden kann und eine spezielle Segmenttafel-Basis für das Betriebssystem nicht erforderlich ist. Damit kann in dieser dritten Bank ATM C der Speicherplatz für die achtzehn Bits der Segmenttafel- Basis mit den zugehörigen zwei Paritätsbits eingespart werden. Jeder Bank ist außerdem eine Hit-Vergleicherschaltung HIT-COMP A, HIT-COMP B, HIT-COMP C zugeordnet, wobei die Hit-Vergleicherschaltung HIT-COMP C für die dritte Bank ATM C wegen des nicht erforderlichen Vergleichs der Segmenttafel-Basis entsprechend weniger aufwendig ist. Die zu übersetzende virtuelle Adresse (24 Bits) wird über das Adreßregister VADR angeboten. Die aktuelle Segmenttafel-Basis ist im Steuerregister STB abgespeichert.

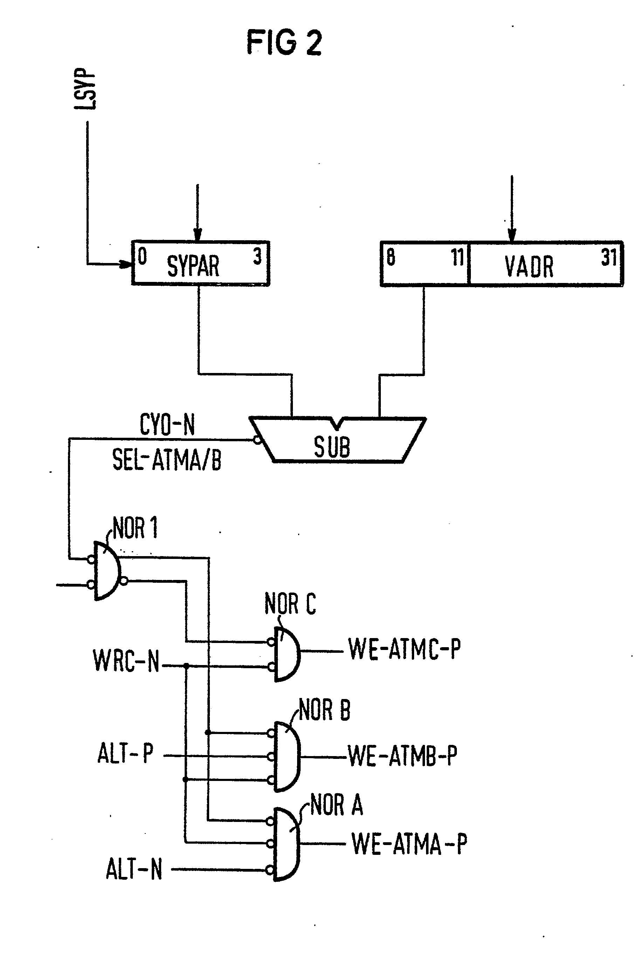

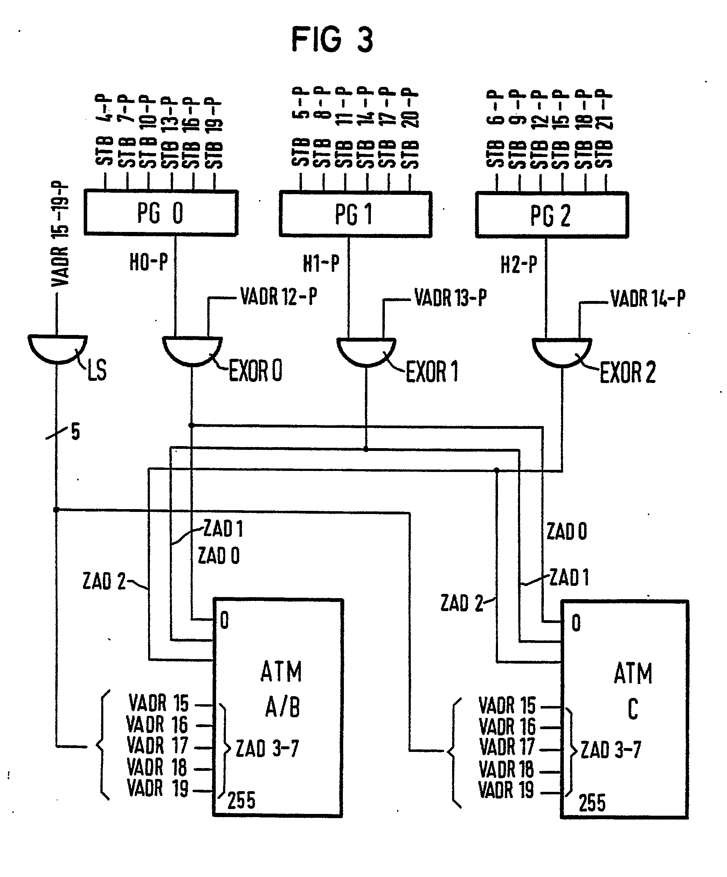

Bei einem erfolgreichen Zugriff zur Adreßumsetzungseinheit ATM, im sogenannten Hit-Fall, ergibt sich folgender Ablauf. Mit der Zeilenadresse ZAD 0-7 werden simultan alle drei Bänke ATM A, ATM B, ATM C adressiert. Diese Zeilenadresse ZAD 0-7 entsteht in einer Modifizierlogik HLS durch "Verwürfeln" der Bits 12 bis 19 der virtuellen Adresse aus dem Adreßregister VADR mit den Bits der Segmenttafel-Basis aus dem Steuerregister STB (siehe auch FIG 3). Infolge der simultanen Adressierung werden auch die reellen Adressen mit den Bits 4 bis 19 aus allen drei Bänken simultan ausgelesen und zum Ausgangs-Multiplexer AMUX gesendet. Hier liegen bereits die Bits 20 bis 31 der aktuellen virtuellen Adresse, die nicht übersetzt werden müssen. Ebenfalls simultan werden die Einträge aus dem Tag/Flag-Feld TF und aus den Kontrollfeldern STBA ausgelesen, zu den Hit-Vergleicherschaltungen gesendet und dort mit den Bits 8 bis 11 der zu übersetzenden virtuellen Adresse, mit der aktuellen Segmenttafel-Basis aus dem Steuerregister STB und mit den aktuellen Flag-Bits F verglichen. Falls keine Hardware-Störung vorliegt, kann nur eine Hit -Vergleicherschaltung eine Signalgleichheit und damit einen erfolgreichen Zugriff, das heißt einen Hit melden. Diese Hit-Meldung wird zusätzlich per Vergleich mit dem Auswahlsignal SEL-ATM A/B aus dem Systemgrenzen-Subtrahierer SUB (siehe auch FIG 2) überwacht. Mittels einer Bankauswahl-Logik BAL wird schließlich die übersetzte reelle Adresse, abhängig von der jeweiligen Hit-Meldung, über den Ausgangsmultiplexer AMUX in ein Hauptspeicher-Adreßregister MA übertragen.

Bei erfolglosem Zugriff, d.h. im sogenannten Miss-Fall ergibt sich ein dem Hit-Fall weitgehend entsprechender Ablauf. Die Zeilenauswahl wird aufrechterhalten, es kommt jedoch keine Hit-Meldung. Stattdessen wird nun die Befehlsverarbeitung unterbrochen und das Mikroprogramm "Adreßübersetzung" aufgerufen. Dieses Mikroprogramm übersetzt die anliegende virtuelle Adresse unter Benutzung der Übersetzungstafeln im Hauptspeicher und trägt die reelle Seitenadresse und die Steuerbits aus der Übersetzungstafel in die ausgewählte Zeile ein. Zusätzlich werden die Bits 8 bis 11 der virtuellen Adresse sowie weitere Steuerbits in das Tag/Flag-Feld TF und die aktuelle Segmenttafel-Basis aus dem Steuerregister STB in das Kontrollfeld STBA eingetragen.

Die Bank-Auswahl hinsichtlich der beiden ersten Bänke ATM A/B einerseits und der dritten Bank ATM C andererseits erfolgt über den Systemgrenzen-Subtrahierer SUB, dessen Funktion in Verbindung mit der Schaltung gemäß FIG 2 näher erläutert wird. Wie bereits erwähnt, muß im Miss-Fall die virtuelle Adresse über die Übersetzungstafel im Hauptspeicher übersetzt werden. Die übersetzte reelle Adresse wird dann abhängig vom Ergebnis des Systemgrenzen-Subtrahierers SUB im Adreßbereich RSA von Bank ATM A bzw. ATM B eingetragen oder von Bank ATM C eingetragen. Ursächlich für diese Maßnahme ist eine im MByte-Raster verschiebliche Systemgrenze, die in dem für jedes Benutzerprogramm z.B. 16 MByte großen virtuellen Adreßraum eingeführt wird. Der System- Grenzwert (in MByte-1) gilt für alle virtuellen Adreßräume und wird durch den Befehl LSYP in ein System- Grenzwert-Register SYPAR geladen. Der oberhalb der Systemgrenze liegende Bereich ist dabei für das in jedem virtuellen Adreßraum in Teilen duplizierte Betriebssystem vorgesehen. Die Zugehörigkeit einer virtuellen Adresse zum Benutzerraum oder zum Systemraum ergibt sich aufgrund folgender Beziehungen:

VADR 8-11 ≦ SYPAR 0-3: virtueller Benutzer-Adreßraum
VADR 8-11 > SYPAR 0-3: virtueller System-Adreßraum.

Die Auswertung dieser Rechenoperation erfolgt in der Schaltung nach FIG 2 mit Hilfe des am Übertragsausgang CYO-N des Systemgrenzen-Subtrahierers SUB auftretenden Auswahlsignals SEL-ATM A/B. Zu diesem Zweck ist der negierte Übertragsausgang CYO-N des Systemgrenzen-Subtrahierers SUB mit einem Eingang eines ersten NOR-Gliedes NOR 1 verbunden, dessen Ausgang über je ein weiteres NOR-Glied NOR A, NOR B mit einem negierten Schreibtaktsignal WRC-N und einem negativen bzw. positiven Alternierungsbit ALT-N, ALT-P zur Bildung je eines Schreibfreigabesignals WE-ATM A-P, WE-ATM B-P für die den Benutzerprogrammen zugeordneten Bänke verknüpft ist und dessen negierter Ausgang über ein weiteres NOR-Glied NOR C mit demselben Schreibtaktsignal WRC-N zur Bildung eines Schreibfreigabesignals WE-ATM C-P für die dem Betriebssystem zugeordnete Bank verknüpft ist.

Im Systemgrenzen-Subtrahierer SUB werden nun vom Inhalt des n-Bit breiten Systemgrenzwert-Registers SYPAR die höchstwertigen n-Adreßbits der virtuellen Adresse, d.h. die Bits 8 bis 11, abgezogen. Dieser Adreßteil mit den Bits 8 bis 11 bestimmt den 1-MByte-Block des virtuellen Adreßraums, in den die virtuelle Adresse zeigt.

Abhängig vom Ausgangsübertrag des Systemgrenzen-Subtrahierers SUB und vom Alternierungsbit ALT wird im Miss-Fall in folgende Bank geschrieben

| SEL-ATM A/B | ALT | Bank-Auswahl |
|---|---|---|
| 1 | 1 | WE-ATM-A |
| 1 | 0 | WE-ATM-B |
| 0 | – | WE-ATM-C |

Bei einem erfolgreichen Zugriff zur Adreßumsetzungseinheit ATM werden einerseits alle drei Bänke simultan ausgelesen und andererseits wird parallel dazu die Kontrollrechnung im Systemgrenzen-Subtrahierer SUB ausgeführt. Es wird überwacht, ob die Kontrollrechnung die von den Hit-Vergleicherschaltungen getroffene Bankauswahl bestätigt. Erst nach der von den Hit-Vergleicherschaltungen getroffenen Entscheidung: HIT-ATM A oder HIT-ATM B oder HIT-ATM C kann die richtige reelle Adresse über den Ausgangsmultiplexer AMUX in das Hauptspeicher-Adreßregister MA durchgeschaltet werden.

Das Prinzip der alternativen Verwaltung der beiden ersten Bänke ATM A und ATM B kann durch ein festes Zuordnungsverfahren ersetzt werden. Dieses erlaubt es, allein anhand der virtuellen Adresse zu entscheiden, ob ein möglicher Hit zu erwarten ist. Bei Anwendung dieses festen Zuordnungsverfahrens ergibt sich im einzelnen folgender Verfahrensablauf: Ein Eintrag in die dem Betriebssystem zugeordnete Bank ATM C erfolgt dann, wenn aufgrund der Beziehung VADR 8-11 > SYPAR 0-3 am negierten Übertragsausgang CYO-N des Systemgrenzen-Subtrahierers SUB das Auswahlsignal SEL-ATM A/B = 0 ist. In diesem Fall zeigt die virtuelle Adresse in den virtuellen Systembereich. Dementsprechend werden die übersetzten Adressen in das Adreßfeld RSA der dritten Bank ATM C geschrieben.

Falls VADR 8-11 ≦ SYPAR 0-3 ist, erfolgt der Eintrag in eine der beiden ersten Bänke ATM A oder ATM B. Zusätzliches Kriterium ist ein Paritätsbit VADR P1, gewonnen aus den Bits 8 bis 15 der virtuellen Adresse, das bei VADR P1 = "0" einen Eintrag in die erste Bank ATM A und bei VADR P1 = "1" einen Eintrag in die zweite Bank ATM B bewirkt.

Die höhere Priorität bei der Selektion der ATM-Bänke hat der Vergleich im Systemgrenzen-Subtrahierer SUB. Damit besteht eine eindeutige und feste Zuordnung aller ATM-Bänke zur virtuellen Adresse. Dieses Verfahren gibt die Möglichkeit, daß der Ausgangsmultiplexer AMUX unabhängig von der Entscheidung, ob ein erfolgreicher oder ein erfolgloser Zugriff zur Adreßumsetzungseinheit - HIT oder MISS - vorliegt, voreingestellt werden kann. Das Ergebnis der Hit-Vergleicherschaltungen muß also nicht abgewartet werden. Abhängig von der virtuellen Adresse wird jeweils diejenige Bank zum Hauptspeicher-Adreßregister MA durchgeschaltet, in der ein möglicher Treffer zu erwarten ist.

Die "Vorhersage", ob die Adresse aus den beiden ersten Bänken ATM A, ATM B oder aus der dritten Bank ATM C zum Hauptspeicher-Adreßregister MA durchgeschaltet wird, erfolgt anhand des Auswahlsignals SEL-ATM A/B und des Paritätsbits VADR P1 im einzelnen wie folgt:

| VADR P1 | SEL-ATM A/B | ATM-Bank |
|---|---|---|
| 0 | 1 | A |
| 1 | 1 | B |
| – | 0 · | C |

Die Hit-Vergleicherschaltungen entscheiden bei diesem Verfahren nur noch, ob generell ein Treffer (HIT) oder ein Fehltreffer (MISS) vorliegt. Außerdem kann die Bankauswahl-Logik BAL nach obiger Wertetabelle durch die Hit-Signale HIT-A, HIT-B oder HIT-C überwacht werden.

Wie bereits erwähnt, steht jedem Benutzer bzw. jedem Anwenderprogramm ein eigener virtueller Adreßraum in der Größe von z.B. 16 MByte zur Verfügung. Erfahrungsgemäß fangen alle Programme bei "0" an, sind aber vielfach nicht 16 Mbyte lang, sondern meist sehr viel kürzer. Wenn also die Speicherbelegung stets bei "0" beginnt, führt dies zu einer entsprechenden Abbildung im Adreßumsetzungsspeicher. Der erste Speicherbereich, beginnend mit der Zeile 0 ist deshalb stets gut ausgelastet, da sich die Einträge verschiedener Benutzerprogramme dort ständig gegenseitig verdrängen, während der hintere Bereich frei und ungenutzt bleibt. Im Hinblick auf eine relativ gleichmäßige Auslastung des Adreßumsetzungsspeichers wird deshalb die virtuelle Adresse "verwürfelt" bzw. modifiziert mit der Folge, daß die einzelnen Einträge der Benutzerprogramme innerhalb des Adreßumsetzungsspeichers an unterschiedlichen Stellen, das heißt an entsprechend unterschiedlichen Zeilen, beginnen, wie das nachfolgende Beispiel zeigt.

| Virt. Adresse | 0 | (Benutzer i): | ATM-Zeile 0 |
|---|---|---|---|
| Virt. Adresse | 4096 | (Benutzer i): | ATM-Zeile 1 |
| . | . | | . |
| . | . | | . |
| . | . | | . |
| Virt. Adresse | 1.044.480 | (Benutzer i): | ATM-Zeile 255 |
| Virt. Adresse | 0 | (Benutzer k): | ATM-Zeile 32 |
| Virt. Adresse | 4096 | (Benutzer k): | ATM-Zeile 33 |
| . | . | | . |
| . | . | | . |
| . | . | | . |
| Virt. Adresse | 1.044.480 | (Benutzer k): | ATM-Zeile 31 |
| usw. | | | |

Zur Verwürfelung bzw. Modifizierung der virtuellen Adresse werden die Bits 4 bis 21 der aktuellen Segmenttafel-Basis verwendet, die im Steuerregister STB hinterlegt sind. Wie die Schaltung gemäß FIG 3 zeigt, werden die Bits der Segmenttafel-Basis STB4-P bis STB21-P unter zyklischer Verteilung den Eingängen dreier Paritätsgeneratoren PG0, PG1, PG2 zugeführt, an deren Ausgängen je ein sogenanntes Hash-Bit H0, H1, H2 auftritt. Jedes so gebildete Hash-Bit wird mit je einem der drei höchstwertigen Bits der virtuellen Zeilenadresse VADR 12, 13, 14 mittels je eines EXOR-Gliedes EXOR 0, EXOR 1, EXOR 2 zu je einem modifizierten Zeilenadreßbit ZAD0, ZAD1, ZAD2 verknüpft. Die restlichen Bits 15 bis 19 der virtuellen Adresse werden nicht modifiziert, sondern lediglich in Leistungsstufen LS zur Ansteuerung der RAM-Bausteine des Adreßumsetzungsspeichers verstärkt. Da die Leistungsstufen ohnehin er forderlich sind und die EXOR-Glieder in etwa die gleiche Laufzeit wie die Leistungsstufen haben, tritt durch den Verwürfelungs-Algorithmus keine Verlangsamung beim Speicherzugriff ein.

Denkt man sich die ATM-Bank mit beispielsweise 256 Zeilen in acht Bereiche zu je 32 Zeilen aufgeteilt (z.B. Bereich 0 = Zeile 0 bis 31 ... Bereich 7 = Zeile 224 bis 255), so kommen abhängig von den Hash-Bits folgende Bereichsvertauschungen zustande:

| VADR12–14 (= Bereich 0–7) | Decodierte Hash-Bits H0, 1, 2 | | | | | | | | |
|---|---|---|---|---|---|---|---|---|---|
| | 0 | 1 | 2 | 3 | 4 | 5 | 6 | 7 | |
| 0 | 0 | 4 | 2 | 6 | 1 | 5 | 3 | 7 | Modifizierte |
| 1 | 1 | 5 | 3 | 7 | 0 | 4 | 2 | 6 | Bereichs- |
| 2 | 2 | 6 | 0 | 4 | 3 | 7 | 1 | 5 | Nummern |
| 3 | 3 | 7 | 1 | 5 | 2 | 6 | 0 | 4 | |
| 4 | 4 | 0 | 6 | 2 | 5 | 1 | 7 | 3 | |
| 5 | 5 | 1 | 7 | 3 | 4 | 0 | 6 | 2 | |
| 6 | 6 | 2 | 4 | 0 | 7 | 3 | 5 | 1 | |
| 7 | 7 | 3 | 5 | 1 | 6 | 2 | 4 | 0 | |

## Patentansprüche

1. Datenverarbeitungsanlage für eine Vielzahl von Benutzern, bei der jedem Benutzer ein eigener, $2^n$ MByte großer virtueller, teilweise mit Teilen des Betriebssystems belegter Speicherraum zur Verfügung steht, der seinerseits in Segmente mit jeweils mehreren Seiten gleicher Größe unterteilt ist, mit einem aus wenigstens zwei Bänken unterteilten Adreßumsetzungsspeicher, in welchem jeweils zeilenweise die den virtuellen Adressen zugeordneten reellen Seitenadressen, die dem jeweiligen Benutzerprogramm zugeordnete Segmenttafel-Basis einschließlich der Paritätsbits und in einem eigenen Tag/Flag-Feld ein Teil der jeweiligen virtuellen Adressen sowie Steuerbits Gültigkeitsbits und Paritätsbits gespeichert sind und mit am Ausgang des Adreßumsetzungsspeichers jeweils einer Bank zugeordneten Vergleicherschaltungen, die die gespeicherten Einträge des Tag/Flag-Feldes und der Segmenttafel-Basis mit dem zugehörigen Anteil der jeweils aktuellen virtuellen Adresse und der jeweils aktuellen Segmenttafel-Basis vergleichen und bei Gleichheit die zugehörige reelle Seitenadresse zusammen mit dem reellen Distanzteil der virtuellen Adresse über einen Ausgangsmultiplexer in ein Hauptspeicher-Adreßregister übertragen, **dadurch gekennzeichnet,** daß im Adreßumsetzungsspeicher eine Bank (ATM C) ausschließlich den Einträgen für das Betriebssystem und wenigstens eine weitere Bank (ATM A, ATM B) den Einträgen für die Benutzerprogramme zugeordnet ist und daß zur Bankauswahl (BAL) ein Systemgrenzen-Subtrahierer (SUB) vorgesehen ist, der aus der Subtraktion eines n-Bit großen Systemgrenzwertes, der die innerhalb des jeweils benutzerbezogenen virtuellen Speicherraums festgelegte Systemgrenze in MBytes minus "1" angibt und der jeweils n höherwertigen Bits der aktuellen virtuellen Adresse in Abhängigkeit vom Ausgangsübertrag (CYO-N) ein Auswahlsignal (SEL-ATM A/B) für jeweils eine Bank erzeugt.

2. Datenverarbeitungsanlage nach Anspruch 1, **dadurch gekennzeichnet,** daß ausgehend von einem Systemgrenzwert, der größer/gleich oder kleiner gegenüber dem Wert der n virtuellen Adreßbits ist, in Abhängigkeit von einem daraus resultierenden Ausgangsübertrag (CYO-N) des Systemgrenzen-Subtrahierers (SUB) eine Auswahl entweder zu Gunsten der Bank (ATM C) für das Betriebssystem oder zu Gunsten der Bank/Bänke (ATM A, ATM B) für die Benutzerprogramme erfolgt.

3. Datenverarbeitungsanlage nach Anspruch 1 oder 2, **dadurch gekennzeichnet,** daß die Unterauswahl zwischen zwei, den Einträgen für die Benutzerprogramme zugeordneten Bänken (ATM A, ATM B) mit Hilfe eines Alternierungsbits (ALT) erfolgt.

4. Datenverarbeitungsanlage nach Anspruch 3, **dadurch gekennzeichnet,** daß der negierte Ausgangs-Übertrag (CYO-N) des Systemgrenzen-Subtrahierers (SUB) mit dem ersten Eingang eines ersten NOR-Gliedes (NOR 1) verbunden ist, dessen Ausgang über je ein weiteres NOR-Glied (NOR A, NOR B) mit einem Schreibtaktsignal (WRC-N) und einem negativen bzw. positiven Alternierungsbit (ALT-N, ALT-P) zur Bildung je eines Schreibfreigabesignals (WE-ATM AP, WE-ATM B-P) für die den Benutzerprogrammen zugeordneten Bänke verknüpft ist und dessen negierter Ausgang über ein weiters NOR-Glied (NOR C) mit dem Schreibtaktsignal (SRC-N) zur Bildung eines Schreibfreigabesignals (WE-ATM C-P) für die dem Betriebssystem zugeordnete Bank verknüpft ist.

5. Datenverarbeitungsanlage nach Anspruch 1 oder 2, **dadurch gekennzeichnet,** daß die Unterauswahl zwischen zwei, den Einträgen für die Benutzerprogramme zugeordneten Bänken (ATM A, ATM B) mit Hilfe eines Paritätsbits (VADR-P1) erfolgt, das aus einem Teil der Bits der virtuellen Adresse abgeleitet ist.

6. Datenverarbeitungsanlage nach einem der vorhergehenden Ansprüche, **dadurch gekennzeichnet,** daß die Bits (STB 4-P...STB 21-P) der Segmenttafel-Basis unter zyklischer Verteilung den Eingängen dreier Paritätsgeneratoren (PG 0, PG 1, PG 2) zugeführt sind, daß jeder Paritätsgenerator ausgangsseitig über je ein EXOR-Glied (EXOR 0, 1, 2) mit jeweils einem der drei höchstwertigen Bits (VADR 12, 13, 14) der Zeilenadresse verknüpft sind und die daraus resultierenden Verwürfelungssignale (H0, H1, H2) zusammen mit den übrigen Bits der virtuellen Zeilenadresse (VADR 15 bis 19) eine modifizierte Zeilenadresse (ZAD 0...7) zur Adressierung der Adreßumsetzungsspeicher bilden.

## Claims

1. Data processing system for a plurality of users, in which a separate virtual storage space, which is partly occupied with sections of the operating system and has a capacity of $2^n$ MBytes, is available to each user, which storage space, in turn, is subdivided into segments having in each case several pages of the same size, with an address conversion store subdivided into at least two banks, in which in each case the real page addresses associated with the virtual addresses, the segment table base associated with the respective user program including the parity bits, and, in a separate tag/flag field, a part of the respective virtual addresses as well as control bits, validity bits and parity bits are stored in each case row by row, and comprising comparator circuits which are in each case associated with one bank at the output of the address conversion store and which compare the stored entries of the tag/flag field and of the segment table base with the associated component of the virtual address which is current in each case and the segment table base which is current in each case, and in the case of equality, transfer the associated real page address together with the real distance part of the virtual address via an output multiplexer into a main memory address register, characterized in that, in the address conversion store, one bank (ATM C) is exclusively associated with the entries for the operating system and at least one further bank (ATM A, ATM B) is associated with the entries for the user programs and in that, for the purpose of bank selection (BAL) a system limit subtracting unit (SUB) is provided which generates on the subtraction of an n-bit-large system limit value which specifies the system limit defined within the in each case user-related virtual storage space in MBytes minus "1" and the in each case n most significant bits of the current virtual address, in dependence on the output carry over (CYO-N), a selction signal (SEL-ATM A/B) for one bank in each case.

2. Data processing system according to Claim 1, characterized in that, starting with a system limit value which is greater than or equal to or less than the value of the n virtual address bits, a selection is made, in dependence on an output carry over (CYO-N) resulting from this of the system limit subtracting unit (SUB), either in favour of the bank (ATM C) for the operating system or in favour of the bank/banks (ATM A; ATM B) for the user programs.

3. Data processing system according to Claim 1 or 2, characterized in that the subselection between two banks (ATM A, ATM B) associated with the entries for the user programs is effected with the aid of an alternation bit (ALT).

4. Data processing system according to Claim 3, characterized in that the negated output carry over (CYO-N) of the system limit subtracting unit (SUB) is connected to the first input of a first NOR gate (NOR 1) the output of which is connected by one further NOR gate (NOR A, NOR B) each to a write clock signal (WRC-N) and a negative or positive alternation bit (ALT-N, ALT-P) for forming one write enable signal (WE-ATM AP, WE-ATM B-P) each for the banks associated with the user programs and the negated output of which is connected via a further NOR gate (NOR C) to the write clock signal (SRC-N) for forming a write enable signal (WE-ATM C-P) for the bank associated with the operating system.

5. Data processing system according to Claim 1 or 2, characterized in that the subselection between two banks (ATM A, ATM B) associated with the entries for the user programs is effected with the aid of a parity bit (VADR P1) which is extracted from a part of the bits of the virtual address.

6. Data processing system according to one of the preceding claims, characterized in that the bits (STB 4-P . . . STB 21-P) of the segment table base are supplied with cyclic distribution to the inputs of three parity generators (PG 0, PG 1, PG 2), in that each parity generator is connected at the output via one EXOR gate (EXOR 0, 1, 2) each to in each case one of the three most significant bits (VADR 12, 13, 14) of the row address and the scrambling signals (H0, H1, H2) resulting from this, together with the remaining bits of the virtual row address (VADR 15 to 19) form a modified row address (ZAD 0 . . . 7) for addressing the address conversion store.

## Revendications

1. Installation de traitement de données pour une multiplicité d'utilisateurs, dans lequel chaque utilisateur dispose d'un volume de mémoire propre virtuel, d'une taille de 2n M.octets, occupé partiellement par des éléments du système d'exploitation et subdivisé, pour sa part, en segments comprenant chacun plusieurs pages de même taille, et comportant une mémoire de conversion d'adresses, qui est subdivisée en au moins deux blocs et dans laquelle sont mémorisés, respectivement ligne par ligne, les adresses réelles de pages, associées aux adresses virtuelles, la base en forme de tableau de segments, associée au programme d'utilisateur respectif, y compris les bits de parité et, dans une zone particulière d'étiquette/drapeau, une partie des adresses virtuelles respectives ainsi que des bits de commande, des bits de validité et des bits de parité, et des circuits comparateurs, qui sont associés respectivement à un bloc à la sortie de la mémoire de conversion d'adresses, comparent les entrées mémorisées de la zone d'étiquette/drapeau et la base en forme de tableau de segments à la partie associée de l'adresse virtuelle actuelle respective et de la base actuelle respective en forme de tableau de segments et, en cas d'égalité, transmettent l'adresse réelle associée de page ainsi que la partie réelle de distance de l'adresse réelle, par l'intermédiaire d'un multiplexeur de sortie, dans un registre d'adresses de mémoire principale, caractérisé en ce que dans la mémoire de conversion d'adresses, un bloc (ATM C) est associé exclusivement aux entrées prévues pour le système d'exploitation et au moins un autre block (ATM A, ATM B) est associé aux entrées pour les programmes d'utilisateurs, et que pour la sélection (BAL) des blocs il est prévu un soustracteur (SUB), qui soustrait la limite du système, qui produit un signal de sélection (SEL-ATM A/B) pour un bloc respectif, à partir de la différence entre une valeur limite du système, d'une taille de n bits, qui indique la limite du système, fixée à l'intérieur du volume virtuel de mémoire, rapporté respectivement à l'utilisateur, en M.octets moins "1", et les n bits respectifs de poids supérieur de l'adresse virtuelle actuelle, en fonction du report de sortie (CYO-N).

2. Installation de traitement de données suivant la revendication 1, caractérisée par le fait qu'une sélection soit en faveur du bloc (ATM C) pour le système d'exploitation, soit en faveur du bloc/des blocs (ATM A, ATM B) pour les programmes d'utilisateur, est réalisée à partir d'une valeur limite du système, qui est supérieure/égale ou inférieure à la valeur des n bits virtuels d'adresse, en fonction d'un report de sortie (CYO-N), qui en résulte, du soustracteur (SUB), qui soustrait la limite du système.

3. Installation de traitement de données suivant la revendication 1 ou 2, caractérisée par le fait que la sélection secondaire entre deux blocs (ATM A, ATM B), associés aux entrées pour les programmes d'utilisateurs est réalisée à l'aide d'un bit d'alternance (ALT):

4. Installation de traitement de données selon la revendication 3, caractérisée en ce que le report de sortie (CYO-N) négativé du soustracteur (SUB), qui soustrait la limite du système, est appliqué à la première entrée d'un premier circuit NON-OU (NOR 1), dont le signal de sortie est relié, par l'intermédiaire d'un autre circuit NON-OU respectif (NOR A, NOR B), à un signal de cadence d'enregistrement (WAC-N) et à un bit d'alternance négatif ou positif (ALT-N, ALT-P) pour la formation d'un signal respectif de déclenchement de l'enregistrement (WE-ATM AP, WE-ATM B-P) pour les blocs associés au programme d'utilisateur, et dont le signal de sortie négativé est combiné, par l'intermédiaire d'un autre circuit NON-OU (NOR C), au signal de cadence d'enregistrement (SRC-N) pour la formation d'un signal de déclenchement de l'enregistrement (WE-ATM C-P) pour le bloc associé au système d'exploitation.

5. Installation de traitement de données suivant la revendication 1 ou 2, caractérisée par le fait que la sélection secondaire entre deux blocs (ATM A, ATM B), associés aux entrées pour les programmes d'utilisateurs, est réalisée à l'aide d'un bit de parité (VADR-P1), qui est dérivé d'une partie des bits de l'adresse virtuelle.

6. Installation de traitement de données suivant l'une des revendications précédentes, caractérisé par le fait que les bits (STB 4-P . . . STB 21-P) de la base en forme de tableau de segments sont envoyés, selon une distribution cyclique, aux entrées de trois générateurs de parités (PG 0, PG 1, PG 2), que le signal de sortie de chaque générateur de parité est combiné, par l'intermédiaire d'un circuit respectif OU-Exclusif (EXOR 0, 1, 2), à l'un respectif des trois bits de poids maximum (VADR 12, 13, 14) de l'adresse de ligne et que les signaux de codage (H0, H1, H2) en résultant forment, conjointement avec les autres bits de l'adresse virtuelle de ligne (VADR 15 à 19), une adresse de ligne modifiée (ZAD 0 . . . 7) pour l'adressage de la mémoire de conversion d'adresses.

# FIG 1

EP 0 176 939 B1

# FIG 2

# FIG 3